# EUROPÄISCHE PATENTSCHRIFT

(11) **EP 3 329 121 B1**
(45) Veröffentlichungstag und Bekanntmachung des Hinweises auf die Patenterteilung: **17.01.2024**
(21) Anmeldenummer: 16753839.6
(22) Anmeldetag: 28.07.2016
(51) Int. Cl.: F03G 7/08, E01D 1/00

(54) **BRÜCKE**
BRIDGE
PONT

(30) Priorität: 31.07.2015 DE 202015104016 U
(43) Veröffentlichungstag der Anmeldung: 06.06.2018
(73) Patentinhaber: Dieterle, Hannah Sophia, 78737 Flourn-Winzeln (DE); Dieterle, Leonie Marie, 77761 Schiltach (DE); Dieterle, Levi Lucas, 77761 Schiltach (DE)
(72) Erfinder: Dieterle, Frank, 77761 Schiltach (DE)
(74) Vertreter: Fleck, Hermann-Josef
(86) Internationale Anmeldenummer: PCT/EP2016/068070
(87) Internationale Veröffentlichungsnummer: WO 2017/021281

(56) Entgegenhaltungen:
- WO-A1-80/02894
- WO-A2-2014/068466
- CN-A- 103 276 664
- DE-A1-102011 109 905
- DE-U1-202011 110 542
- JP-A- 2009 243 128
- JP-A- 2011 149 227
- KR-A- 20110 125 194

## Beschreibung

Die Erfindung betrifft eine Brücke mit einer einen Wegabschnitt tragenden Tragkonstruktion, die mit mindestens einer Energiewandeleinrichtung zur Umwandlung von kinetischer Energie in elektrische Energie versehen ist.

Brücken umfassen in der Regel mittels einer Tragkonstruktion getragene Wegübergänge, wobei die Tragkonstruktion eine Trägereinheit für den Wegabschnitt, Widerlager und meist weitere Tragelemente umfasst. So wird bei einer Balkenbrücke beispielsweise die Trägereinheit mittels Brückenlagern auf seiner Unterseite durch Brückenpfeiler und Widerlager aufgenommen. Bei einer Hängebrücke ist die Trägereinheit mittels Tragseilen an Pylonen aufgehängt.

Durch die Überfahrt von Fahrzeugen über den Wegübergang oder auch durch Windanregung entsteht häufig eine Auf- und Abbewegung der Trägereinheit von mehreren Zentimetern, wobei die Bewegung auch horizontale Komponenten aufweisen kann. In solchen Bewegungen ist aufgrund der großen Masse der die Brücke überquerenden Objekte und der Trägereinheit eine hohe Energie enthalten.

Die Nutzung kinetischer Energie, welche durch Fahrzeuge erzeugt wird, geht in der Anwendung für Brücken und Straßen aus dem Stand der Technik hervor.

So ist in der WO 2014/068466 A2 eine Brücke mit in der Tragkonstruktion angeordneter Energiewandeleinrichtung für mechanische Schwingungen in elektrische Energie gezeigt, die eine Kolben-Zylindereinheit mit Hydraulikantrieb aufweist.

In der KR 2011 0125194 A ist eine pneumatische Energiewandeleinrichtung dargestellt und ein Einbau in eine Brücke genannt.

In der DE 20 2011 110 542 U1 ist ein modellhafter Aufbau mit einer Energiewandlereinrichtung für mechanische Schwingungen in elektrische Energie im Zusammenhang mit einer Brücke angegeben, wobei ein mechanisches Getriebe mit einem Stromerzeuger verbunden und zentral unter dem Ende zweier Brückenabschnitte zwischen zwei Anschlagsäulen mit Stoßdämpfern eingeordnet ist.

Ähnlich ist in der DE 10 2011 109 905 A1 ist eine gefedert-bewegliche Brücke gezeigt, die durch ein mechanisches Getriebe mit einem Stromerzeuger verbunden ist.

In der JP 2009-243 128 A ist ein Stromerzeugungselement zur Verwendung an einer Brücke angegeben, welches auf einer Kombination von Spiralfeder und Lineargenerator mit einem Rotor- und einem Statorteil beruht.

In der DE 101 40 629 A1 ist ein Verfahren zur Gewinnung von Elektroenergie aus der Umwelt angegeben, wobei mechanische Bewegung elastisch gelagerter oder beweglicher Bauwerke mittels an bestimmten Punkten angeordneter mechanisch/elektrischer Energiewandler in elektrische Energie gewandelt wird. Bei Brückenanordnungen können derartige Energiewandler beispielsweise in herkömmlichen Topflagern (Elastomerlager) integriert oder parallel zu diesen angeordnet werden. Nachteilig hierbei ist die aufgrund der geringen Beweglichkeit der Elastomerlager niedrige Stromausbeute bzw. Ausbeute an elektrischer Energie.

Die US 2012/0176003 A1 zeigt eine federnde Brückenunterstützung mit einer Elastomerfüllung, in der mehrere piezoelektrische Elemente zur Umwandlung von Brückenvibrationen in elektrische Energie angeordnet sind.

Die WO 2014/068466 A2 zeigt als Wandeleinrichtung eine hydraulische Kolben-Zylinder-Einheit in Verbindung mit einem rotierenden Generator, wobei die Vorrichtung unter anderem zusätzlich zu Lagerelementen in eine Brücke eingebaut werden kann. Nähere Angaben sind nicht gemacht.

Die GB 2 457 342 A zeigt eine Vorrichtung zur Umwandlung von kinetischer Energie in nutzbare Energie allgemein für Straßen. Die Vorrichtung weist einen Rahmen mit an diesem befestigten, relativ zum Rahmen beweglichen Platten auf, welche bei Überfahrt eines Fahrzeuges eine Energieumwandlungsvorrichtung antreiben. Der Rahmen wird in einer Fahrzeugfahrbahn angebracht. Auf diese Weise ändert er die Fahrbahnbeschaffenheit und kann daher nur unter bestimmten Bedingungen, beispielweise in einer Zone geringer Geschwindigkeit, eingesetzt werden. Zudem ergibt sich ein verhältnismäßig hoher Installationsaufwand.

Die DE 10 2010 034 744 B4 zeigt den Einbau einer hydraulischen Vorrichtung zur Gewinnung von Energie durch Umwandlung von kinetischer Energie von bewegten, ausgekuppelten Fahrzeugen im Straßenverkehr. Die Umwandlungsvorrichtung weist ein Rahmengestell mit Kolben und Zylinderbohrungen sowie Hydraulikkanälen auf. Zum Umwandeln in elektrische Energie sind ein mit einem Hydromotor gekoppelter Elektrogenerator und Piezostromerzeuger genannt. Mit dieser speziell aufgebauten Umwandlungsvorrichtung soll eine Gewinnung von sekundärer Energie von nur rollenden, ausgekuppelten Fahrzeugen ermöglicht werden, wobei das Rahmengestell im Bereich der Fahrbahn angeordnet ist.

Der vorliegenden Erfindung liegt die Aufgabe zugrunde, eine Brücke bereitzustellen, welche die Nutzung kinetischer Energie auf möglichst effiziente Weise erreichen lässt.

Diese Aufgabe wird mit den Merkmalen des Anspruches 1 gelöst. Hierbei ist vorgesehen, dass die Energiewandeleinrichtung zumindest zum Teil in oder an einem Brückenlager angeordnet ist und dass die Energiewandeleinrichtung zumindest zum Teil gleichzeitig als Brückenlager genutzt ist. Die kinetische Energie geht hierbei von Bewegungen von Tragelementen der Tragkonstruktion, nämlich einer Trägereinheit des Wegabschnitts aus, wobei insbesondere schwingende Auf- und Abbewegungen auftreten, aber auch horizontale Bewegungsanteile enthalten sein können. Z. B. kann die Trägereinheit selbst aus einem oder mehreren Elementen bestehen und je nach Brücke unterschiedlich aufgebaut sein, insbesondere aus einem oder mehreren Betonelementen und/oder Stahlträgern etc. Ferner kann die Trägereinheit außer dem Wegabschnitt weitere Komponenten tragen wie Geländer, Brückenkappen etc. Gegenüber statischen Trageelementen, wie Brückenpfeilern oder Widerlagern, aber auch zum Teil an verformbaren Tragelementen selbst oder zwischen beweglichen Tragelementen können bei der Bewegung der Trägereinheit Relativbewegungen entstehen. Der genannte Einbau in die Tragkonstruktion der Brücke ergibt eine vorteilhafte Nutzung der Brücke im Zusammenhang mit der Energiewandeleinrichtung, wobei der Wegabschnitt unbeeinträchtigt bleibt. Die Energiewandeleinrichtung ist zumindest zum Teil in oder an einem Brückenlager angeordnet, beispielsweise an dem Widerlager, und befindet sich so nicht nur an einer optisch unauffälligen, sondern auch an einer geschützten Stelle. Dort können zumindest Teile der Energiewandeleinrichtung zur effektiven Energienutzung zuverlässig installiert werden. Die Energiewandeleinrichtung ist zumindest zum Teil gleichzeitig als Brückenlager genutzt. Da so ein Element der Tragkonstruktion der Brücke selbst für die Energieumwandlung genutzt wird, welches ohnehin für den Aufbau der Brücke benötig wird, wird der konstruktive Aufwand für die erfindungsgemäße energetische Nutzung gering gehalten. Auch wird ein geringer Installationsraum benötigt, wobei lediglich die Peripherie der Energiewandeleinrichtung, wie beispielsweise die elektrischen Anschlüsse, gegebenenfalls Speichereinheiten oder auch weitere, beispielsweise mechanische oder hydraulische Elemente, berücksichtigt zu werden braucht. Dabei ist die Energiewandeleinrichtung auch optisch unauffällig gestaltbar. Die Energiewandeleinrichtung kann zumindest zum Teil von Hause aus oder nachträglich in die Brücke installiert werden.

Ein Tragelement im erfindungsgemäßen Sinne ist ein Teil der Tragkonstruktion, d. h. es nimmt einen Teil der auf dem Wegabschnitt befindlichen Lasten auf. Tragelemente sind dabei beispielsweise Brückenpfeiler, Brückenlager oder Widerlager, Trägereinheit, Streben, aber auch Federn oder Stahlseile, wie z. B. im Falle einer Hängebrücke, und dergleichen sind möglich.

Bei der Erfindung ist es vorgesehen, dass die Energiewandeleinrichtung an Übergangsbereichen zwischen mindestens zwei relativ zueinander beweglichen Tragelementen der Tragkonstruktion angeordnet ist. Auf diese Weise können unterschiedliche Bewegungen zur Energiegewinnung ausgenutzt werden.

Erfindungsgemäß ist die Ausgestaltung so ausgeführt, dass die Energiewandeleinrichtung zumindest zum Teil im Bereich zwischen einem festen Widerlager und/oder Brückenpfeiler der Brücke und einem an diesem krafteinleitend abgestützten, als Trägereinheit des Wegabschnitts dienenden Tragelement angeordnet ist. Auf diese Weise erfährt die Energiewandeleinrichtung die Relativbewegung der sich bewegenden Trägereinheit gegenüber dem Widerlager und/oder dem Brückenpfeiler, welcher ein statisches, unbewegliches Element ist. So kann die direkte Auf- und Abbewegung der Trägereinheit unmittelbar auf die Energiewandeleinrichtung übertragen werden.

Die Tragelemente, an denen verschiedene Teile der Energiewandeleinrichtung aufgenommen sind, können bereits werkseitig entsprechend ausgestaltet werden und beim Neuaufbau einer Brücke eingesetzt oder später nachgerüstet werden.

Dadurch, dass durch wechselnde Lasten auf dem Wegabschnitt und/oder durch Wind erzeugte Bewegungen, insbesondere Schwingungen von zumindest Teilen der Tragkonstruktion, als kinetische Energie zur Umwandlung mittels der Energiewandeleinrichtung genutzt sind, macht die Energiewandeleinrichtung Energie nutzbar, die ohnehin auf die Brücke übertragen wird, welche aber ohne die erfindungsgemäße energetische Nutzung verloren ginge. Auf diese Weise trägt die Erfindung zu einer effizienten Energieausnutzung bei. Auch die potentielle Energie der Lasten auf der Brücke kann dabei genutzt werden.

Eine einfache Installationsmöglichkeit wird dadurch erreicht, dass die Energiewandeleinrichtung eine Kolben-Zylindereinheit mit Hydraulikantrieb, wobei sie einen mittels Federkraft abgestützten Federstempel aufweist. Mit dieser Ausführung ist die Energiewandeleinrichtung insbesondere einfach parallel zwischen den Brückenlagern anzuordnen und dient selbst gleichzeitig als Brückenlager.

Wenn die Energiewandeleinrichtung eine rotatorisch oder translatorisch arbeitende Bewegungsvorrichtung aufweist, die einerseits durch die kinetische Energie anregbar ist und mittels deren andererseits ein in einer mechanisch-elektrischen Wandeleinheit angeordneter Körper rotatorisch oder translatorisch antreibbar ist, erlaubt dies eine einfache und effiziente Umwandlung der kinetischen Energie in elektrische Energie mittels eines elektrischen Generators.

Besonders effizient lässt sich die Energie umwandeln, wenn die Energiewandeleinrichtung eine Spulenanordnung und eine mit dieser zusammenwirkende Permanentmagnetanordnung aufweist. Hierzu kann durch eine rotatorisch oder translatorisch arbeitende Bewegungsvorrichtung z. B. eine angemessen dimensionierte Schwungmasse mit zyklischer Bewegung angetrieben werden.

Ein vorteilhafter energetischer Nutzen wird mittels der erfindungsgemäßen Brücke erreicht, wenn eine Einspeisevorrichtung zur Einspeisung der elektrischen Energie in das öffentliche Netz vorhanden ist und/oder eine an die Energiewandeleinrichtung angeschlossene Speichereinrichtung, wie Akkumulatoren oder Speicherkondensatoren, vorhanden ist. Besonders geeignet ist eine Speicherung in Form von chemischer Energie, insbesondere in Akkumulatoren.

Ein breites Einsatzgebiet der erfindungsgemäßen Brücke bietet sich, wenn die Brücke eine Kraftfahrzeugbrücke und/oder eine Fußgängerbrücke und/oder eine Eisenbahnbrücke ist.

Erfindungsgemäß ist vorgesehen, dass der in oder an dem Brückenlager angeordnete und als Brückenlager genutzte Teil der Energiewandeleinrichtung einen Hydraulikstempel aufweist oder als Hydraulikstempel ausgebildet ist. Der Hydraulikstempel weist dabei vorzugsweise eine Kolben-Zylindereinheit auf, wobei der Kolben durch seine Bewegung das Volumen eines mit Hydraulikflüssigkeit gefüllten Fluidraums verändert. Der Fluidraum ist dabei in dem den Kolben umgebenden Zylinderraum angeordnet. Der Hydraulikstempel erlaubt eine genaue Auslegung auf die von ihm aufzunehmenden Lasten, wobei sich bestimmte Verstellbewegungen des Kolbens des Hydraulikstempels insbesondere entlang einer Mittellängsachse M bei bestimmten Lasten ergeben können. Wird die Trägereinheit der Brücke z. B. durch die Überfahrt durch PKW oder LKW in Bewegung versetzt, wird diese auf den oder die Hydraulikstempel übertragen, dessen / deren Kolben so in Bewegung versetzt wird / werden. Durch Parallel- oder Hintereinanderschaltung von Kolben unterschiedlicher Flächen können auch unterschiedliche Betätigungswege bzw. Übersetzungen in Abhängigkeit von Last und Ausbildung des zu betreibenden Generators gebildet werden. Durch unterschiedlich dicke Strömungsbohrungen für das Fluid lassen sich definierte Fließdauern bzw. Dämpfungseigenschaften realisieren.

Für die Funktion als Teil einer Energiewandeleinrichtung ist es vorteilhaft, wenn der Kolben des Hydraulikstempels eine Verstellbewegung entlang einer Mittellängsachse M des Hydraulikstempels von mindestens 1,5 cm, insbesondere von mindestens 2 cm ausführt. Eine derart relativ große Verstellbewegung, größer als beispielsweise bei herkömmlich eingesetzten Elastomerlagern, ist vorteilhaft für die Stromgewinnung. Vorzugsweise ist dabei der Hydraulikstempel oder das den Hydraulikstempel aufweisende Brückenlager derart ausgelegt, dass auch horizontale, beispielsweise Gleitbewegungen der Brücke aufgenommen werden können, was für den gleichzeitigen Einsatz als Brückenlager Vorteile bringt.

Zur erfindungsgemäßen Funktion als Brückenlager trägt bei, dass dem Hydraulikstempel ein Federelement zum Rückstellen der Verstellbewegung des Hydraulikstempels zugeordnet ist. Das Federelement ist dabei vorzugsweise in dem gleichen Element wie der Hydraulikstempel angeordnet, beispielsweise den Hydraulikstempel umgebend oder auf andere vorteilhafte Weise. So wird ein Element erhalten, das durch Abstimmung der Federkraft und des Hydraulikstempels als Brückenlager gut geeignet ist. Wird der Hydraulikstempel aufgrund von Brückenbewegungen eingedrückt, sorgt anschließend die Federkraft für eine Rückstellung in die ursprüngliche vertikale Position. Eine Rückstellung kann zusätzlich mittels kommunizierender Röhren durch wechselnde Lasten erfolgen.

Ein flexibles System zur Stromerzeugung wird dadurch erhalten, dass die Energiewandeleinrichtung einen Hydraulik-Flüssigkeit führenden Hydraulikkreislauf aufweist, an den der Hydraulikstempel angeschlossen ist, und dass in dem Hydraulikkreislauf ein Generator zur Umwandlung der Fluidbewegung der Hydraulikflüssigkeit in elektrische Energie angeordnet ist. Durch die Bewegung des Hydraulikstempels wird die Flüssigkeit in dem Kreislauf in Bewegung versetzt und treibt den Generator an. Vorteilhaft ist dabei die verhältnismäßig große Verstellbewegung von mindestens 1,5 cm, da somit ein relativ großes Flüssigkeitsvolumen bewegt wird, das den Generator antreibt.

Vorteilhaft für die Funktion der Energiewandeleinrichtung kann es sein, wenn ein Ausgleichsbehältnis, wie ein Puffer- oder Ausgleichsgefäß, für Hydraulikflüssigkeit vorgesehen ist. In dieses kann zum einen Hydraulikflüssigkeit entweichen, die von dem Kolben aus einem Hydraulikflüssigkeit enthaltenden Fluidraum eines oder mehrerer Hydraulikstempel verdrängt wird. Beim Rückstellen des Kolbens durch das Federelement gelangt dann Flüssigkeit wieder umgekehrt in den Hydraulikstempel. Zum anderen kann das Gefäß zum Ausgleich von eventuellen Hydraulikflüssigkeitsverlusten aus dem Kreislauf dienen, wobei verlorene Hydraulikflüssigkeit nachgefüllt werden kann.

Wenn die Hydraulikleitung des Hydraulikkreislaufes aus mehreren, gegeneinander abgedichteten Rohrelementen, worunter auch Schlauchelemente zu verstehen sind, aufgebaut ist, sodass sie zusammen mit mindestens einem Hydraulikstempel ein modular erweiterbares System bildet, kann das System um weitere Elemente der Energiewandeleinrichtung erweitert werden.

So ist es beispielsweise vorteilhaft, wenn an dem Hydraulikkreislauf mindestens zwei Hydraulikstempel angeschlossen sind. In einer besonders effizienten und einfach aufgebauten Variante der Energiewandeleinrichtung sind alle als Brückenlager verwendeten Hydraulikstempel an den Kreislauf angeschlossen, sodass an dem gesamten System der Energiewandeleinrichtung einer Brücke z. B. lediglich ein Generator benötigt wird. An den Kreislauf können auch weitere hydraulische Elemente der Energiewandeleinrichtung angeschlossen sein, die beispielsweise auch Elemente, die eine horizontale Brückenbewegung auffangen, oder weitere Elemente umfassen.

Nachfolgend wird die Erfindung anhand von Ausführungsbeispielen unter Bezugnahme auf die Zeichnungen näher erläutert. Es zeigen:
- Fig. 1: einen Abschnitt einer Brücke mit Tragkonstruktion und Trägereinheit in seitlicher Ansicht und
- Fig. 2: einen oberen Abschnitt einer Brücke mit einem Widerlager von vorne mit Schnitt durch die Trägereinheit gemäß Fig. 1 mit Teilen einer Energiewandeleinrichtung und
- Fig. 3: eine schematische Seitenansicht einer Brücke mit einer weiteren Variante einer Energiewandeleinrichtung.

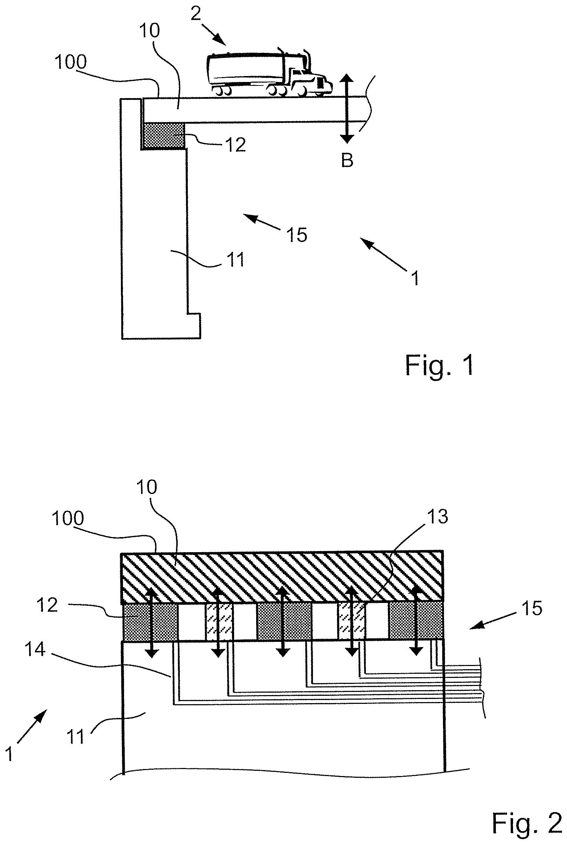

Fig. 1 zeigt einen Abschnitt einer Brücke 1 mit einer eine Trägereinheit 10 umfassenden Tragkonstruktion 15. Auf der Trägereinheit 10 befindet sich ein Wegabschnitt 100, welcher beispielsweise einen Abschnitt einer Autobahn bildet und über welchen ein Kraftfahrzeug 2 fährt. Auf dem Wegabschnitt 100 und/oder an der Trägereinheit 10 können weitere, hier nicht dargestellte Komponenten wie Leitplanken, Geländer etc. angeordnet sein. Die Trägereinheit 10 ist auf mindestens einem weiteren Tragelement der Tragkonstruktion 15, das durch ein Widerlager 11 gebildet ist, mittels mehrerer Brückenlager 12, von welchen eines dargestellt ist, beweglich gelagert. Auch die Brückenlager 12 bilden Teile der Tragkonstruktion 15. Die Tragkonstruktion 15 umfasst neben Brückenlagern 12 zumindest zwei, jeweils an den beiden Enden der Brücke angeordnete Widerlager 11, von welchen in Fig. 1 eines dargestellt ist. Ferner umfasst die Tragkonstruktion 15 mehrere Brückenpfeiler (nicht dargestellt). Das Widerlager 11 ist statisch auf dem Untergrund aufgesetzt, sodass bei Auf- und Abbewegungen B der Trägereinheit 10 eine Relativbewegung zwischen der Trägereinheit 10 und dem Widerlager 11 entsteht, welche von dem Brückenlager 12 aufgenommen wird. Die Bewegungen der Trägereinheit 10 entstehen dabei hauptsächlich durch über den Wegabschnitt 100 fahrende Kraftfahrzeuge. Ferner können an der Tragkonstruktion 15 angreifende Winde Bewegungen hervorrufen.

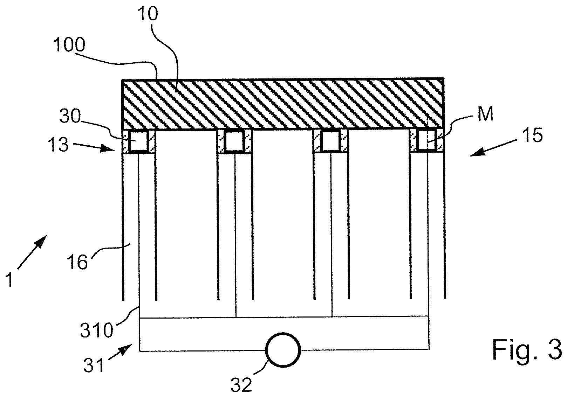

Fig. 2 zeigt den oberen Abschnitt des Widerlagers 11 von vorne, wobei die Trägereinheit 10 mit dem Wegabschnitt 100 im Schnitt dargestellt ist. Die Breite des Widerlagers 11 stimmt hierbei im Wesentlichen mit der Breite der Trägereinheit 10 überein, jedoch wäre auch eine von der Trägereinheitbreite abweichende Widerlagerbreite möglich. Unterhalb der Trägereinheit 10 sind drei Brückenlager 12 angeordnet, mittels welcher die Trägereinheit 10 auf dem Widerlager 11 relativ zu diesem beweglich gelagert ist. Parallel zwischen den Brückenlagern 12 ist zusätzlich zu diesen eine Energiewandeleinrichtung 13 mit zwei separaten Energiewandeleinheiten angeordnet, welche aufgrund ihrer Positionierung in etwa die gleichen Bewegungen wie die Brückenlager 12 erfahren. Die Energiewandeleinheiten der Energiewandeleinrichtung 13 weisen z.B. jeweils eine Kolben-Zylindereinheit mit Hydraulikantrieb, beispielsweise auch als Hydraulikstempel 30 (vgl. Fig. 3) ausgebildet, auf, welche die Auf- und Abbewegungen der Trägereinheit 10 mittels der bewegten Hydraulikflüssigkeit z.B. mit Hilfe einer relativ zu einer Permanentmagnetanordnung bewegten Spulenanordnung (Induktionsprinzip) in elektrische Energie umwandeln. In Fig. 2 können auch die Brückenlager 12 derart ausgebildet sein, dass diese als Energiewandeleinrichtung 13 fungieren. Auch sie bestehen beispielsweise aus einer Kolben-Zylindereinheit mit Hydraulikantrieb, sind jedoch insgesamt massiver ausgeführt, wobei noch eine geeignete Federabstützung eingebaut sein kann. So können die Brückenlager 12 die im Wesentlichen zwischen der Gesamtheit der Brückenlager 12 verteilte Gewichtskraft der Trägereinheit 10 mit dem Wegabschnitt 100 sowie darauf befindlicher Lasten aufnehmen und abstützen. Von den Energiewandeleinheiten der Energiewandeleinrichtung 13 sowie von den als solche ausgeführten Brückenlagern 12 führen elektrische Anschlüsse 14 zu einer (hier nicht dargestellten) Speichereinrichtung, die aus mehreren Akkumulatoren besteht. Hierin wird nun die aus der Bewegung der Brücke 1 umgewandelte elektrische Energie gespeichert und kann hieraus beispielsweise zum Betreiben von elektrischen Verbrauchern, wie beispielsweise Beleuchtungseinrichtungen verwendet werden.

In Fig. 3 ist eine weitere bevorzugte Variante der Energiewandeleinrichtung 13 dargestellt. In dieser Ausführungsvariante weist die Energiewandeleinrichtung 13 neben mehreren Brückenlagern 12 zusätzlich einen Hydraulikkreislauf 31 und einen in dem Kreislauf 31 angeordneten Generator 32 auf. Die Brückenlager 12 sind hierbei auf Brückenpfeilern 16 angeordnet, sie könnten aber auch an anderen Stellen der Brücke, beispielsweise wie in Fig. 2 an dem Widerlager angeordnet sein. Die Brückenlager 12 sind als Hydraulikstempel 30 derart ausgeführt, dass sie bei Bewegung der Trägereinheit 10 ggf. mit Übersetzung eine vertikale Verstellbewegung von mindestens 1,5 cm, insbesondere von mindestens 2 cm bewerkstelligen können. Zusätzlich sind den Hydraulikstempeln Federabstützungen in Form von Federelementen zugeordnet (hier nicht ersichtlich), und die zum Brückenlager 12 zugehörigen Elemente können zusätzlich von einem schützenden Gehäuse umgeben sein. Die Brückenlager 12 sind derart ausgebildet, dass sie auch horizontale Bewegungskomponenten aufnehmen können, wie sie insbesondere bei Kippbewegungen relativ zur Gravitationsrichtung entstehen können, ohne dass es zu einer Beeinträchtigung der Kolben-Zylindereinheit kommt. Hierzu können z. B. auch kugelabschnittartige Kappen oder dgl. vorgesehen sein. Sämtliche an der Brücke 1 installierte und als Brückenlager 12 ausgeführte Hydraulikstempel 30 sind an den Hydraulikkreislauf 31 angeschlossen, der gegen die Umgebung abgedichtet und mit Hydraulikflüssigkeit gefüllt ist. Der Generator dient als eigentliche Energiewandeleinheit von Bewegungsenergie der bewegten Hydraulikflüssigkeit in elektrische Energie.

Wird nun die Trägereinheit 10 beispielsweise durch überfahrende LKW belastet, überträgt sich die Bewegung der Trägereinheit 10 auf den Kolben der Kolben-Zylindereinheit, wobei der Kolben entlang einer Mittellängsachse M des Hydraulikstempels 30 zunächst innerhalb des Zylinders nach unten gedrückt wird. Hierdurch wird ein mit Hydraulikflüssigkeit gefüllter Fluidraum im Bereich des Zylinders des Hydraulikstempels 30 verkleinert und Hydraulikflüssigkeit durch einen definierten Auslass aus dem Fluidraum in Hydraulikleitungen 310 des Hydraulikkreislaufs 31 verdrängt. Das zusätzlich in die Hydraulikleitungen 310 gedrückte Flüssigkeitsvolumen kann in ein, hier nicht gezeigtes, Puffergefäß gelangen, welches vorzugsweise ebenfalls in dem Hydraulikkreislauf 31 angeordnet ist und z. B. auch ein Membranbehälter mit einer dehnbaren Membran sein kann. So entsteht eine Fluidbewegung der Hydraulikflüssigkeit, die den Generator 32 antreibt, der wiederum die Bewegungsenergie der Flüssigkeit in elektrische Energie umwandelt.

Bei der auf die Abbewegung folgenden Aufbewegung des Kolbens wird wiederum Hydraulikflüssigkeit in die andere Richtung in den Fluidraum des Hydraulikstempels 30 hineinbewegt, wobei aus der in dem Hydraulikkreislauf 31 entstehenden Fluidbewegung in entgegengesetzter Richtung wiederum über den Generator 32 Strom erzeugbar ist.

Vorzugsweise sind die Hydraulikleitungen 310 über Dichtelemente und entsprechende Adapter derart modular aneinandergeschlossen, dass das System der Energiewandeleinrichtung 13 auf einfache Weise z.B. um einen oder mehrere weitere Hydraulikstempel 30 erweiterbar ist. Auf diese Weise ist der Brücke 1 eine als geschlossenes System ausgeführte Energiewandeleinrichtung 13 zugeordnet, das sowohl bei Neubauten als auch im Nachhinein bei einer Brückensanierung installierbar ist. Werden bei einer Brückensanierung nacheinander in zeitlichen Abständen Brückenlager 12 ausgetauscht und durch als Hydraulikstempel 30 ausgeführte Brückenlager 12 ersetzt, können diese auch im Nachhinein an das bereits bestehende System angeschlossen werden. Natürlich wäre es auch denkbar, dass an einer Brücke 1 mehrere Energiewandeleinrichtungen 13 mit eigenen Hydraulikkreisläufen 31 und Generatoren 32 installiert sind, oder dass z. B. in einem Kreislauf 31 mehrere Generatoren 32 angeordnet sind.

Mit den verschiedenen Ausführungen der installierten Energiewandeleinrichtung 13 bietet die Brücke neben ihrer Hauptfunktion als Wegüberführung zugleich den Nutzen der Energierückgewinnung. Wird die elektrische Energie von im Bereich der Brücke selbst angeordneten Verbrauchern genutzt, kann auch eine aufwendige Energiezuführung von außen eingespart werden.
verdrängt. Das zusätzlich in die Hydraulikleitungen 310 gedrückte Flüssigkeitsvolumen kann in ein, hier nicht gezeigtes, Puffergefäß gelangen, welches vorzugsweise ebenfalls in dem Hydraulikkreislauf 31 angeordnet ist und z. B. auch ein Membranbehälter mit einer dehnbaren Membran sein kann. So entsteht eine Fluidbewegung der Hydraulikflüssigkeit, die den Generator 32 antreibt, der wiederum die Bewegungsenergie der Flüssigkeit in elektrische Energie umwandelt.

Bei der auf die Abbewegung folgenden Aufbewegung den Kolbens wird wiederum Hydraulikflüssigkeit in die andere Richtung in den Fluidraum des Hydraulikstempels 30 hineinbewegt, wobei aus der in dem Hydraulikkreislauf 31 entstehenden Fluidbewegung in entgegengesetzter Richtung wiederum über den Generator 32 Strom erzeugbar ist.

Vorzugsweise sind die Hydraulikleitungen 310 über Dichtelemente und entsprechende Adapter derart modular aneinandergeschlossen, dass das System der Energiewandeleinrichtung 13 auf einfache Weise z.B. um einen oder mehrere weiteren Hydraulikstempel 30 erweiterbar ist. Auf diese Weise ist der Brücke 1 eine als geschlossenes System ausgeführte Energiewandeleinrichtung 13 zugeordnet, das sowohl bei Neubauten als auch im Nachhinein bei einer Brückensanierung installierbar ist. Werden bei einer Brückensanierung nacheinander in zeitlichen Abständen Brückenlager 12 ausgetauscht und durch als Hydraulikstempel 30 ausgeführte Brückenlager 12 ersetzt, können diese auch im Nachhinein an das bereits bestehende System angeschlossen werden. Natürlich wäre es auch denkbar, dass an einer Brücke 1 mehrere Energiewandeleinrichtungen 13 mit eigenen Hydraulikkreisläufen 31 und Generatoren 32 installiert sind, oder dass z.B. in einem Kreislauf 31 mehrere Generatoren 32 angeordnet sind.

Mit den verschiedenen Ausführungen der installierten Energiewandeleinrichtung 13 bietet die Brücke neben ihrer Hauptfunktion als Wegüberführung zugleich den Nutzen der Energierückgewinnung. Wird die elektrische Energie von im Bereich der Brücke selbst angeordneten Verbrauchern genutzt, kann auch eine aufwendige Energiezuführung von außen eingespart werden.

## Patentansprüche

1. Brücke (1) mit einer einen Wegabschnitt (100) tragenden Tragkonstruktion (15), die mit mindestens einer Energiewandeleinrichtung (13) zur Umwandlung von kinetischer Energie in elektrische Energie versehen ist, wobei die Energiewandeleinrichtung (13) mindestens eine Kolben-Zylindereinheit mit Hydraulikantrieb aufweist, wobei
die Energiewandeleinrichtung (13) zum Teil in einem Brückenlager (12) angeordnet ist und zumindest zum Teil gleichzeitig als Brückenlager (12) genutzt ist, wobei die Energiewandeleinrichtung (13) zumindest zum Teil an Übergangsbereichen zwischen mindestens zwei relativ zueinander beweglichen Tragelementen der Tragkonstruktion (15) in der Weise angeordnet ist, dass die Energiewandeleinrichtung (13) zumindest zum Teil im Bereich zwischen einem festen Widerlager (11) und/oder Brückenpfeiler (16) der Brücke (1) und einem an diesem krafteinleitend abgestützten, als Trägereinheit (10) des Wegabschnitts (100) dienenden Tragelement angeordnet ist, und
dass der in dem Brückenlager (12) angeordnete und als Brückenlager (12) genutzte Teil der Energiewandeleinrichtung (13) einen Hydraulikstempel (30) mit Kolben-Zylindereinheit aufweist oder als Hydraulikstempel (30) mit Kolben-Zylindereinheit ausgebildet ist, wobei dem Hydraulikstempel (30) ein Federelement zum Rückstellen der Verstellbewegung des Hydraulikstempels (30) zugeordnet ist.

2. Brücke (1) nach Anspruch 1,
**dadurch gekennzeichnet,**
**dass** die Energiewandeleinrichtung (13) zumindest zum Teil parallel zwischen Brückenlagern (12) angeordnet ist.

3. Brücke (1) nach einem der Ansprüche 1 oder 2,
**dadurch gekennzeichnet,**
**dass** durch wechselnde Lasten auf dem Wegabschnitt (100) und/oder durch Wind erzeugte Bewegungen, insbesondere Schwingungen von zumindest Teilen der Tragkonstruktion (15) als kinetische Energie zur Umwandlung mittels der Energiewandeleinrichtung (13) genutzt sind.

4. Brücke (1) nach einem der Ansprüche 1 bis 3,
**dadurch gekennzeichnet,**
**dass** die Energiewandeleinrichtung (13) eine rotatorisch oder translatorisch arbeitende Bewegungsvorrichtung aufweist, die einerseits durch die kinetische Energie anregbar ist und mittels deren andererseits ein in einer mechanisch-elektrischen Wandeleinheit angeordneter Körper rotatorisch oder translatorisch antreibbar ist.

5. Brücke (1) nach einem der Ansprüche 1 bis 4,
**dadurch gekennzeichnet,**
**dass** die Energiewandeleinrichtung (13) eine Spulenanordnung und eine mit dieser zusammenwirkende Permanentmagnetanordnung aufweist.

6. Brücke (1) nach einem der Ansprüche 1 bis 5,
**dadurch gekennzeichnet,**
**dass** eine Einspeisevorrichtung zur Einspeisung der elektrischen Energie in das öffentliche Netz vorhanden ist und/oder eine an die Energiewandeleinrichtung (13) angeschlossene Speichereinrichtung vorhanden ist.

7. Brücke (1) nach einem der Ansprüche 1 bis 6,
**dadurch gekennzeichnet,**
**dass** die Brücke (1) eine Kraftfahrzeugbrücke und/oder eine Fußgängerbrücke und/oder eine Eisenbahnbrücke ist.

8. Brücke (1) nach einem der vorhergehenden Ansprüche,
**dadurch gekennzeichnet,**
**dass** der Hydraulikstempel (30) eine Verstellbewegung entlang einer Mittellängsachse M des Hydraulikstempels (30) von mindestens 1,5 cm, insbesondere von mindestens 2 cm erlaubt.

9. Brücke (1) nach einem der vorhergehenden Ansprüche,
**dadurch gekennzeichnet,**
**dass** mehrere Hydraulikstempel wechselweise in einem System mit kommunizierenden Röhren infolge wechselnder Lasten rückstellbar angeordnet sind.

10. Brücke (1) nach einem der vorhergehenden Ansprüche,
**dadurch gekennzeichnet,**
**dass** die Energiewandeleinrichtung (13) einen Hydraulik-Flüssigkeit führenden Hydraulikkreislauf (31) aufweist, an den der Hydraulikstempel (30) angeschlossen ist und dass in dem Hydraulikkreislauf (31) ein Generator (32) zur Umwandlung der Fluidbewegung der Hydraulikflüssigkeit in elektrische Energie angeordnet ist.

11. Brücke (1) nach Anspruch 10 ,
**dadurch gekennzeichnet,**
**dass** ein Ausgleichsbehältnis für Hydraulikflüssigkeit vorgesehen ist.

12. Brücke (1) nach Anspruch 10 oder 11,
**dadurch gekennzeichnet,**
**dass** eine Hydraulikleitung (310) des Hydraulikkreislaufes (31) aus mehreren, gegeneinander abgedichteten Rohrelementen aufgebaut ist, sodass sie zusammen mit mindestens einem Hydraulikstempel (30) ein modular erweiterbares System bildet.

13. Brücke (1) nach einem der Ansprüche 11 bis 12,
**dadurch gekennzeichnet,**
**dass** an dem Hydraulikkreislauf (31) mindestens zwei Hydraulikstempel (30) angeschlossen sind.

## Claims

1. Bridge (1) having a support structure (15) supporting a path portion (100), which support structure is provided with at least one energy conversion device (13) for converting kinetic energy into electrical energy, wherein the energy conversion device (13) comprises at least one piston-cylinder unit having a hydraulic drive, wherein the energy conversion device (13) is arranged in part in a bridge bearing (12) and at least in part is simultaneously used as a bridge bearing (12), wherein the energy conversion device (13) is arranged at least in part at transition regions between at least two support elements of the support structure (15), which support elements are movable relative to one another, in such a way that the energy conversion device (13) is arranged at least in part in the region between a fixed abutment (11) and/or bridge pier (16) of the bridge (1) and a support element which rests thereon in a force-introducing manner and is used as a support unit (10) of the path portion (100), and
that the part of the energy conversion device (13) that is arranged in the bridge bearing (12) and is used as a bridge bearing (12) comprises a hydraulic cylinder (30) having a piston-cylinder unit, or is designed as a hydraulic cylinder (30) having a piston-cylinder unit, wherein a spring element for restoring the displacement movement of the hydraulic cylinder (30) is associated with the hydraulic cylinder (30).

2. Bridge (1) according to claim 1,
**characterized in that**
the energy conversion device (13) is arranged at least in part in parallel between bridge bearings (12).

3. Bridge (1) according to either claim 1 or claim 2,
**characterized in that**
movements generated by changing loads on the path portion (100) and/or by wind, in particular vibrations of at least parts of the support structure (15), are used as kinetic energy for conversion by means of the energy conversion device (13).

4. Bridge (1) according to any of claims 1 to 3,
**characterized in that**
the energy conversion device (13) comprises a movement apparatus which operates in a rotary or translatory manner, which movement apparatus can be excited by the kinetic energy and by means of which a body arranged in a mechanical-electrical conversion unit can be driven in a rotary or translatory manner.

5. Bridge (1) according to any of claims 1 to 4,
**characterized in that**
the energy conversion device (13) comprises a coil assembly and a permanent magnet assembly interacting therewith.

6. Bridge (1) according to any of claims 1 to 5,
**characterized in that**
a feed apparatus for feeding the electrical energy into the public grid is present, and/or a storage device connected to the energy conversion device (13) is present.

7. Bridge (1) according to any of claims 1 to 6,
**characterized in that**
the bridge (1) is a motor vehicle bridge and/or a pedestrian bridge and/or a railroad bridge.

8. Bridge (1) according to any of the preceding claims,
**characterized in that**
the hydraulic cylinder (30) allows a displacement movement along a central longitudinal axis M of the hydraulic cylinder (30) of at least 1.5 cm, in particular of at least 2 cm.

9. Bridge (1) according to any of the preceding claims,
**characterized in that**
a plurality of hydraulic cylinders are arranged in a system having communicating tubes in an alternating manner and such that they can be restored as a result of changing loads.

10. Bridge (1) according to any of the preceding claims,
**characterized in that**
the energy conversion device (13) comprises a hydraulic circuit (31) carrying a hydraulic fluid, to which hydraulic circuit the hydraulic cylinder (30) is connected, and **in that** a generator (32) is arranged in the hydraulic circuit (31) for converting the fluid movement of the hydraulic fluid into electrical energy.

11. Bridge (1) according to claim 10,
**characterized in that**
an equalizing tank for hydraulic fluid is provided.

12. Bridge (1) according to claim 10 or claim 11,
**characterized in that**
a hydraulic line (310) of the hydraulic circuit (31) is constructed from a plurality of tube elements sealed against one another, such that they form a modularly expandable system together with at least one hydraulic cylinder (30).

13. Bridge (1) according to any of claims 11 to 12,
**characterized in that**
at least two hydraulic cylinders (30) are connected to the hydraulic circuit (31).

## Revendications

1. Pont (1) comportant une structure porteuse (15) portant un tablier (100), laquelle structure porteuse est pourvue d'au moins un dispositif de conversion d'énergie (13) permettant de convertir de l'énergie cinétique en énergie électrique, dans lequel le dispositif de conversion d'énergie (13) présente au moins une unité piston-cylindre comportant un entraînement hydraulique,
dans lequel le dispositif de conversion d'énergie (13) est disposé en partie dans un appui de pont (12) et est utilisé au moins en partie simultanément comme appui de pont (12), dans lequel le dispositif de conversion d'énergie (13) est disposé au moins en partie au niveau de zones de transition entre au moins deux éléments porteurs de la structure porteuse (15) mobiles l'un par rapport à l'autre, de manière telle que le dispositif de conversion d'énergie (13) est disposé au moins en partie dans la zone entre une butée fixe (11) et/ou un pilier de pont (16) du pont (1) et un élément porteur soutenu sur ceux-ci de manière à introduire une force et servant d'unité de support (10) du tablier (100), et
que la partie du dispositif de conversion d'énergie (13) disposée dans l'appui de pont (12) et utilisée comme appui de pont (12) présente un étançon hydraulique (30) comportant une unité piston-cylindre ou est conçue comme un étançon hydraulique (30) comportant une unité piston-cylindre, dans lequel un élément formant ressort permettant la remise en place du mouvement de réglage de l'étançon hydraulique (30) est associé à l'étançon hydraulique (30).

2. Pont (1) selon la revendication 1,
**caractérisé en ce que**
le dispositif de conversion d'énergie (13) est disposé au moins en partie parallèlement entre des appuis de pont (12).

3. Pont (1) selon l'une des revendications 1 ou 2,
**caractérisé en ce que**
des mouvements générés par des charges variables sur le tablier (100) et/ou par le vent, en particulier des oscillations d'au moins des parties de la structure porteuse (15), sont utilisés comme énergie cinétique destinée à être convertie au moyen du dispositif de conversion d'énergie (13).

4. Pont (1) selon l'une des revendications 1 à 3,
**caractérisé en ce que**
le dispositif de conversion d'énergie (13) présente un appareil de mouvement fonctionnant en rotation ou en translation qui peut être excité d'une part par l'énergie cinétique et au moyen duquel, d'autre part, un corps disposé dans une unité de conversion mécanique-électrique peut être entraîné en rotation ou en translation.

5. Pont (1) selon l'une des revendications 1 à 4,
**caractérisé en ce que**
le dispositif de conversion d'énergie (13) présente un agencement de bobines et un agencement d'aimants permanents coopérant avec celui-ci.

6. Pont (1) selon l'une des revendications 1 à 5,
**caractérisé en ce que**
un appareil d'alimentation pour l'alimentation en énergie électrique du réseau public est prévu et/ou un dispositif d'accumulation connecté au dispositif de conversion d'énergie (13) est prévu.

7. Pont (1) selon l'une des revendications 1 à 6,
**caractérisé en ce que**
le pont (1) est un pont pour véhicules automobiles et/ou un pont pour piétons et/ou un pont ferroviaire.

8. Pont (1) selon l'une des revendications précédentes,
**caractérisé en ce que**
l'étançon hydraulique (30) permet un mouvement de réglage le long d'un axe longitudinal médian M de l'étançon hydraulique (30) d'au moins 1,5 cm, en particulier d'au moins 2 cm.

9. Pont (1) selon l'une des revendications précédentes,
**caractérisé en ce que**
plusieurs étançons hydrauliques sont disposés alternativement dans un système comportant des tubes communicants de manière à pouvoir être remis en place en raison de charges variables.

10. Pont (1) selon l'une des revendications précédentes,
**caractérisé en ce que**
le dispositif de conversion d'énergie (13) présente un circuit hydraulique (31) conduisant du liquide hydraulique, auquel l'étançon hydraulique (30) est raccordé, et qu'un générateur (32) permettant de convertir le mouvement de fluide du liquide hydraulique en énergie électrique est disposé dans le circuit hydraulique (31).

11. Pont (1) selon la revendication 10,
**caractérisé en ce que**
un réservoir de compensation pour le liquide hydraulique est prévu.

12. Pont (1) selon la revendication 10 ou 11,
**caractérisé en ce que**
une conduite hydraulique (310) du circuit hydraulique (31) est constituée de plusieurs éléments tubulaires étanches les uns par rapport aux autres, de sorte qu'elle forme, conjointement avec au moins un étançon hydraulique (30), un système extensible de manière modulaire.

13. Pont (1) selon l'une des revendications 11 à 12,
**caractérisé en ce que**
au moins deux étançons hydrauliques (30) sont raccordés au circuit hydraulique (31).
